# FASCICULE DE BREVET EUROPEEN

(11) **EP 1 390 701 B1**
(45) Date de publication et mention de la délivrance du brevet: **06.10.2004**
(21) Numéro de dépôt: 02745282.0
(22) Date de dépôt: 07.05.2002
(51) Int. Cl.: G01G 19/414, B60N 2/00, B60N 2/56

(54) **DISPOSITIF DE DETECTION DES OCCUPANTS D'UN VEHICULE**
EINRICHTUNG ZUM ERKENNEN VON PASSAGIEREN EINES FAHRZEUGS
DEVICE FOR DETECTING PASSENGERS OF A VEHICLE

(30) Priorité: 08.05.2001 LU 90771
(43) Date de publication de la demande: 25.02.2004
(73) Titulaire: IEE INTERNATIONAL ELECTRONICS & ENGINEERING S.A., 6468 Echternach (LU)
(72) Inventeur: ORLEWSKI, Pierre, 8293 Keispelt (LU)
(74) Mandataire: Beissel, Jean
(86) Numéro de dépôt international: PCT/EP2002/005015
(87) Numéro de publication internationale: WO 2002/090901

(56) Documents cités:
- WO-A-00/26626
- WO-A-99/58023
- DE-C- 4 237 072
- FR-A- 2 790 430
- US-A- 6 068 332

## Description

### Introduction

La présente invention concerne un dispositif de détection destiné à être intégré dans un siège automobile, comme par exemple un dispositif de détection d'occupation de siège ou dispositif de classification d'un passager assis sur le siège. Ces dispositifs comprennent généralement un capteur de pression flexible, qui détecte une pression exercée par un passager sur le siège.

Un capteur de pression flexible est par exemple décrit dans le document DE-A-42 37 072. Il s'agit d'un détecteur de pression à intégrer dans le siège du passager, qui comporte deux substrats flexibles isolants disposés à une certaine distance l'un au dessus de l'autre à l'aide d'un écarteur. L'écarteur comprend p.ex. une bande adhésive double face qui est découpée de manière à entourer au moins en partie les zones actives du détecteur. A l'intérieur des zones actives, une des feuilles support est munie de deux structures d'électrodes en matériau conducteur espacées l'une de l'autre, tandis que l'autre feuille support est munie d'un revêtement en matériau semi-conducteur ou résistif, sensible à la pression. Le matériau semi-conducteur ou résistif présente des microsaillies à la surface, de telle sorte que la résistance de surface entre la couche et un conducteur diminue quand la couche est pressée sur le conducteur.

Une autre exécution d'un capteur de siège flexible est décrit dans le document WO-A-00/26626. Il s'agit d'un capteur comprenant un support flexible en matière isolante, au moins deux structures d'électrodes disposées sur ledit substrat isolant à une certaine distance l'une de l'autre, et une couche en matière semi-conductrice disposée au dessus desdites structures d'électrodes. Ladite couche en matière semi-conductrice présente une résistance interne variant avec une déformation de ladite couche et est disposée en contact intime avec les structures d'électrodes.

Afin de détecter la présence d'un passager sur un siège, le capteur flexible est intégré dans le siège automobile, par exemple sur la face assise du siège entre la mousse et la housse du siège. La pression mesurée et/ou la répartition de la pression sur le siège permettent de conclure sur une occupation du siège respectivement sur la stature de la personne assise.

Il est clair que des dispositifs de détection de ce genre ont besoin d'une réaction définie de la partie de siège située en dessous du capteur flexible afin de bien fonctionner. Cette réaction du siège devrait être constante sur toute la vie du véhicule et ceci dans n'importe quelle conditions atmosphériques. Or la mousse du siège, par exemple une mousse en polyuréthanne, présente une dureté qui est largement dépendant de la température ambiante. De plus, le stabilité de la mousse va diminuer avec l'âge du véhicule. Il s'ensuit que le signal détecté par un tel dispositif de détection pour une même occupation du siège va considérablement varier au cours du temps.

### Objet de l'invention

L'objet de la présente invention est de proposer un dispositif de détection pour siège automobile amélioré.

### Description générale de l'invention

Conformément à l'invention, cet objectif est atteint par un dispositif de détection pour siège automobile, comprenant un capteur de pression flexible et une couche de découplage fixée sur la face inférieure du capteur de pression, ladite couche de découplage comprenant un module d'élasticité constant. La couche de découplage forme un support pour le capteur de pression, qui présente un module d'élasticité constant. Le capteur de pression est par conséquent découplé de la mousse du siège qui elle présente un module d'élasticité assez variable avec la température et sur la durée de vie du siège. Il s'ensuit qu'avec le dispositif de détection de la présente invention, la réaction du support du capteur de pression est largement indépendant des conditions de température et de l'âge du dispositif. Par conséquent, le dispositif est caractérisé par un comportement mécanique constant dans une large gamme de températures. De plus, la résistance mécanique de la couche de découplage est stable sur la durée de vie du dispositif, permettant une détection fiable sur toute la durée de vie du siège.

Dans une exécution préférée, la couche de découplage comprend une structure ouverte avec une couche inférieure et une structure d'écartement disposée sur ladite couche inférieure. Une telle structure ouverte est favorable à une circulation d'air dans la couche de découplage et permet par conséquent une ventilation très efficace du dispositif de détection et du siège. De plus, la couche de découplage est de préférence composée de matières hydrophobes ou du moins non-hydrophiles, de telle sorte que le séchage du siège par la circulation d'air est facilité. Il s'ensuit que le confort du siège peut être considérablement amélioré par rapport à un siège comprenant un dispositif de détection classique.

La structure d'écartement peut comprendre des éléments écarteurs flexibles réparties sur une surface de la couche inférieure. Ces éléments écarteurs comprennent par exemple des blocs en néoprène et/ou des anneaux en caoutchouc et/ou des ressorts en métal et/ou des poches remplies d'un gaz. Ces éléments assurent une stabilité des propriétés mécaniques de la couche de découplage sur une longue durée de vie. Il est à noter que le nombre des éléments écarteurs détermine la résistance mécanique de la couche de découplage, c'est à dire son module d'élasticité. Il est donc possible d'ajuster les propriétés de résistance de l'ensemble siège/capteur dans une large mesure, c'est à dire d'influencer le confort du siège. Il sera apprécié que cette modulation du confort du siège pourra également se faire par une combinaison de différentes couches ayant des duretés différentes.

Dans une autre exécution, ladite structure d'écartement comprend un tissu entretoise, c'est-à-dire une structure ouverte tissée en 3D. De tels structures en tissu entretoise sont par exemple connus de la demande de brevet EP-A-0616065.

Afin de prévoir une surface plane pour la fixation du capteur flexible sur la couche de découplage, celle-ci comprend de préférence une couche supérieure en non-tissé. La couche en non-tissé peut par exemple être cousue sur la structure d'écartement. Le montage du capteur de pression sur la couche de découplage pourra se faire avantageusement par collage du capteur de pression sur la couche supérieure en non-tissé ou par une fixation par un système autoaccrochant du type Velcro ou magnétique. Il est à noter qu'un système autoaccrochante du type Velcro peut éventuellement comprendre une seule bande munie de crochets, qui est collée sur le capteur de pression. Les crochets de la bande s'accrochent dans ce cas directement dans les fibres du non-tissé c'est-à-dire la couche en non-tissé formera dans la partie "femelle" du système agrippant.

La couche inférieure pourra elle aussi comprendre une couche en non-tissé, qui facilitera avantageusement le montage du dispositif de détection sur la mousse du siège p.ex. par collage ou par un système autoaccrochant.

Dans une exécution avantageuse du dispositif de détection, un élément de chauffage est intégré la couche de découplage. Dans une telle exécution, le dispositif de détection et le chauffage de siège forment un module préfabriqué avec de préférence un seul connecteur qui se laisse facilement mettre en place sur le siège. L'intégration de l'élément chauffant dans la couche de découplage permet en outre de minimiser les interférences entre l'élément chauffant et le capteur de pression. Il est à noter que la structure ouverte de la couche de découplage favorise la convection de la chaleur émanant de l'élément chauffant, ce qui assure une bonne distribution d'air chaud dans le siège et augmente le confort d'un siège équipé d'un tel dispositif. Il sera apprécié que l'élément chauffant sera avantageusement intégré dans la couche inférieure en non-tissé. Une telle exécution protège le passager de tout sentiment de brûlure et protège la coiffe du siège (en particulier les cuirs) du vieillissement prématuré dû à la surchauffe ou au dessèchement.

Une autre variante du dispositif comprend au moins un capteur de température et/ou un capteur d'humidité intégré dans la couche de découplage. Les capteurs de température peuvent par exemple comprendre des thermistors ou des micro thermomètres, qui fournissent des signaux de température utilisés dans la commande du chauffage de siège ou dans la classification du passager afin de compenser les effets thermiques. Un capteur d'humidité sera par exemple utilisé afin d'allumer le chauffage de siège quand un certain taux d'humidité est détecté. Il sera apprécié que du à l'intégration des capteurs dans la couche de découplage, ceux-ci sont moins exposés aux sollicitations mécaniques et par conséquent mieux protégés contre des défauts.

L'homme du métier comprendra aisément, que le capteur de pression flexible peut être choisi parmi plusieurs types. Ainsi dans une première variante, ledit capteur de pression comprend un premier et un deuxième substrat flexible, lesdits premier et deuxième substrats flexibles étant arrangés à une certaine distance l'une au dessus de l'autre à l'aide d'un écarteur, deux structures d'électrodes disposées sur ledit premier substrat à une certaine distance l'une de l'autre, et une couche en matière semi-conductrice disposée sur ledit deuxième substrat en face des deux structures d'électrodes.

Dans une autre variante, le capteur de pression comprend un premier et un deuxième substrat flexible, lesdits premier et deuxième substrats flexibles étant arrangés à une certaine distance l'une au dessus de l'autre à l'aide d'un écarteur, une première et une deuxième structure d'électrode, ladite première structure d'électrode étant disposé sur ledit premier substrat et ladite deuxième structure d'électrode étant disposée sur ledit deuxième substrat en face de ladite première structure d'électrode, et une couche en matière semi-conductrice disposée entre ladite première structure d'électrode et ladite deuxième structure d'électrode.

Alternativement, ledit capteur de pression peut comprendre un support flexible en matière isolante, au moins deux structures d'électrodes disposées sur ledit substrat isolant à une certaine distance l'une de l'autre, et une couche en matière semi-conductrice disposée en contact intime sur desdites structures d'électrodes dans une zone active du détecteur, ladite couche en matière semi-conductrice présentant une résistance interne variant avec une déformation de ladite couche.

### Description à l'aide des figures

D'autres particularités et caractéristiques de l'invention ressortiront de la description détaillée de quelques modes de réalisation avantageux présentés ci-dessous, à titre d'illustration, en référence aux dessins annexés. Celles ci montrent:
Fig.1: une coupe à travers un siège automobile avec un dispositif de détection;
Figs. 2 à 5: différentes exécutions possibles de la couche de découplage.

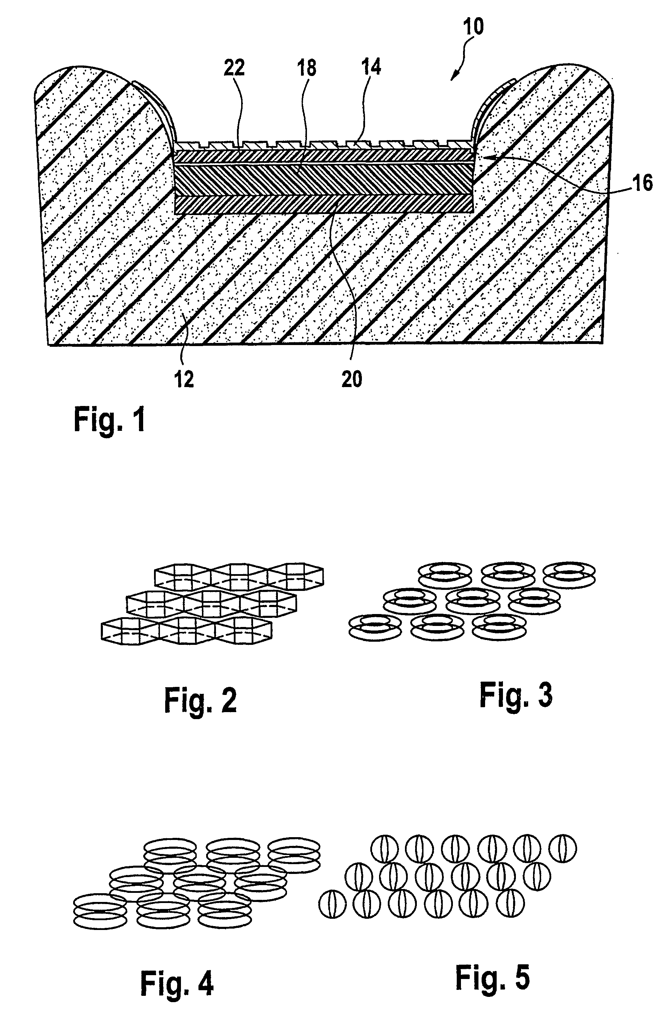

La figure 1 montre une coupe transversale d'une exécution du dispositif de détection 10 selon l'invention, le dispositif étant monté sur un siège automobile 12. Le dispositif de détection 10 comprend une structure en sandwich avec un capteur de pression flexible 14 fixé sur une couche de découplage 16.

La couche de découplage comprend une structure d'écartement 18 montée sur une couche inférieure en non-tissé 20, qui peut comprendre un élément chauffant intégré. Dans une exécution possible, la structure d'écartement peut être cousue sur le couche inférieure en non-tissé. Une couche supérieure 22, p.ex. en non-tissé, est fixée sur la structure d'écartement. Cette couche supérieure 22 présente une surface plane supérieure sur laquelle est collé le capteur 14.

Il est à noter que le dispositif de détection 10 forme un module préfabriquable d'une épaisseur entre 5 mm et 3 cm. Un tel module se laisse facilement monter sur la face assise du siège 12 par exemple par collage.

Les figures 2 à 5 montrent schématiquement différentes exécutions pour la couche de découplage. Une exécution avec un tissu d'écartement en nids d'abeilles est par exemple représentée dans la fig. 2. Les figures 3 à 5 montrent des exécutions dans lesquelles la structure d'écartement de la couche de découplage comprend des élément écarteurs comme des anneaux en caoutchouc (fig. 3), des ressorts (fig. 4) ou des poches à gaz (fig.5). Il est clair que toute combinaison de ces éléments écarteurs est possible, ainsi qu'un sandwich de plusieurs couches de découplage différentes.

## Revendications

1. Dispositif de détection (10) pour siège automobile (12), comprenant un capteur de pression flexible (14) ledit capteur de pression comprenant une face.supérieur et une face inférieure, **caractérisé par** une couche de découplage (16) fixée sur la face inférieure du capteur de pression, ladite couche de découplage (16) comprenant un module d'élasticité constant.

2. Dispositif de détection (10) selon la revendication 1, dans lequel la couche de découplage (16) comprend une structure ouverte avec une couche inférieure (20) et une structure d'écartement (18) disposée sur ladite couche inférieure (20)

3. Dispositif de detection (10) selon la revendication 2, dans lequel ladite structure d'écartement (18) comprend des éléments écarteurs flexibles réparties sur une surface de la couche inférieure (20)

4. Dispositif de détection (10) selon la revendication 3, dans lequel lesdits éléments écarteurs comprennent des blocs en néoprène et/ou des anneaux en caoutchouc et/ou des ressorts en métal et/ou des poches remplies d'un gaz.

5. Dispositif de détection (10) selon la revendication 2, dans lequel ladite structure d'écartement (18) comprend un tissu entretoise.

6. Dispositif de détection selon l'une des revendications 2 à 5, dans lequel la couche de découplage (16) comprend une couche supérieure (22) en non-tissé.

7. Dispositif de détection (10) selon la revendication 6, dans lequel le capteur de pression (14) est collé sur la couche supérieure (22) en non-tissé.

8. Dispositif de détection (10) selon la revendication 6, dans lequel le capteur de pression (14) est assemblé sur la couche supérieure (22) en non-tissé au moyen d'un système autoaccrochant ou magnétique.

9. Dispositif de détection (10) selon l'une des revendications 2 à 8, dans lequel la couche inférieure (20) comprend une couche en non-tissé.

10. Dispositif de détection (10) selon l'une des revendications 2 à 9, comprenant un élément de chauffage intégré dans la couche de découplage (16).

11. Dispositif de détection (10) selon l'une des revendications 2 à 10, comprenant un capteur de température et/ou un capteur d'humidité intégré dans la couche de découplage (16).

12. Dispositif de détection (10) selon l'une des revendications 2 à 11, dans lequel ledit capteur de pression (14) comprend
un premier et un deuxième substrat flexible, lesdits premier et deuxième substrats flexibles étant arrangés à une certaine distance l'une au dessus de l'autre à l'aide d'un écarteur,
deux structures d'électrodes disposées sur ledit premier substrat à une certaine distance l'une de l'autre, et
une couche en matière semi-conductrice disposée sur ledit deuxième substrat en face des deux structures d'électrodes.

13. Dispositif de détection (10) selon l'une des revendications 2 à 11, dans lequel ledit capteur de pression (14) comprend
un premier et un deuxième substrat flexible, lesdits premier et deuxième substrats flexibles étant arrangés à une certaine distance l'une au dessus de l'autre à l'aide d'un écarteur,
une première et une deuxième structure d'électrode, ladite première structure d'électrode étant disposé sur ledit premier substrat et ladite deuxième structure d'électrode étant disposée sur ledit deuxième substrat en face de ladite première structure d'électrode, et
une couche en matière semi-conductrice disposée entre ladite première structure d'électrode et ladite deuxième structure d'électrode.

14. Dispositif de détection (10) selon l'une des revendications 2 à 11, dans lequel ledit capteur de pression (14) comprend un support flexible en matière isolante, au moins deux structures d'électrodes disposées sur ledit substrat isolant à une certaine distance l'une de l'autre, et une couche en matière semi-conductrice disposée en contact intime sur desdites structures d'électrodes dans une zone active du détecteur, ladite couche en matière semi-conductrice présentant une résistance interne variant avec une déformation de ladite couche.

## Patentansprüche

1. Detektionsvorrichtung (10) für einen Autositz (12), umfassend einen flexiblen Druckfühler (14), wobei der Druckfühler eine obere Seite und eine untere Seite umfasst, **gekennzeichnet durch** eine Entkopplungsschicht (16), die auf der unteren Seite des Druckfühlers befestigt ist, wobei die Entkopplungsschicht (16) einen konstanten Elastizitätsmodul umfasst.

2. Detektionsvorrichtung (10) nach Anspruch 1, wobei die Entkopplungsschicht (16) eine offene Struktur umfasst, mit einer unteren Schicht (20) und einer Abstandsstruktur (18), die auf der unteren Schicht (20) aufliegt.

3. Detektionsvorrichtung (10) nach Anspruch 2, wobei die Abstandsstruktur (18) flexible Abstandselemente umfasst, die auf einer Oberfläche der unteren Schicht (20) verteilt sind.

4. Detektionsvorrichtung (10) nach Anspruch 3, wobei die Abstandselemente aus Neoprenblöcken und/oder Gummiringen und/oder Metallfedern und/oder mit Gas gefüllten Taschen bestehen.

5. Detektionsvorrichtung (10) nach Anspruch 2, wobei die Abstandsstruktur (18) ein Abstandsgewebe umfasst.

6. Detektionsvorrichtung (10) nach irgendeinem der Ansprüche 2 bis 5, wobei die Entkopplungsschicht (16) eine obere Schicht (22) aus Faservlies umfasst.

7. Detektionsvorrichtung (10) nach Anspruch 6, wobei der Druckfühler (14) auf die obere Schicht (22) aus Faservlies aufgeklebt ist.

8. Detektionsvorrichtung (10) nach Anspruch 6, wobei der Druckfühler (14) auf der oberen Schicht (22) aus Faservlies mittels eines selbst- haftenden oder magnetischen Systems haftet.

9. Detektionsvorrichtung (10) nach irgendeinem der Ansprüche 2 bis 8, wobei die untere Schicht (20) eine Schicht aus Faservlies umfasst.

10. Detektionsvorrichtung (10) nach irgendeinem der Ansprüche 2 bis 9, die ein in die Entkopplungsschicht (16) integriertes Heizelement umfasst.

11. Detektionsvorrichtung (10) nach irgendeinem der Ansprüche 2 bis 10, die einen in die Entkopplungsschicht (16) integrierten Temperatur- und/oder Feuchtigkeitsfühler umfasst.

12. Detektionsvorrichtung (10) nach irgendeinem der Ansprüche 2 bis 11, wobei der Druckfühler (14) umfasst
ein erstes und ein zweites flexibles Substrat, wobei das erste und das zweite flexible Substrat mit Hilfe eines Abstandshalters in einer gewissen Entfernung übereinander angeordnet sind,
zwei Elektrodenstrukturen, die auf dem ersten Substrat in einer gewissen Entfernung voneinander angeordnet sind,
eine Schicht aus halbleitendem Material, die auf dem zweiten Substrat gegenüber den beiden Elektrodenstrukturen angeordnet ist.

13. Detektionsvorrichtung (10) nach irgendeinem der Ansprüche 2 bis 11, wobei der Druckfühler (14) umfasst
ein erstes und ein zweites flexibles Substrat, wobei das erste und das zweite flexible Substrat mit Hilfe eines Abstandhalters in einer gewissen Entfernung übereinander angeordnet sind,
eine erste und eine zweite Elektrodenstruktur, wobei die erste Elektrodenstruktur auf dem ersten Substrat und die zweite Elektrodenstruktur auf dem zweiten Substrat gegenüber der ersten Elektrodenstruktur angeordnet sind und
eine Schicht aus halbleitendem Material, die zwischen der ersten Elektrodenstruktur und der zweiten Elektrodenstruktur angeordnet ist.

14. Detektionsvorrichtung (10) nach irgendeinem der Ansprüche 2 bis 11, wobei der Druckfühler (14) einen flexiblen Träger aus isolierendem Material, mindestens zwei auf diesem isolierenden Substrat in einer gewissen Entfernung voneinander angeordnete Elektrodenstrukturen und eine Schicht aus halbleitendem Material umfasst, die in engem Kontakt auf den Elektrodenstrukturen in einem aktiven Bereich des Detektors angeordnet sind, wobei die Schicht aus halbleitendem Material einen Innenwiderstand aufweist, der mit der Deformation der genannten Schicht variiert.

## Claims

1. Detection device (10) for automobile seat (12), comprising a flexible pressure sensor (14), said pressure sensor comprising an upper face and a lower face, **characterized by** a decoupling layer (16) fixed on the lower face of the pressure sensor, said decoupling layer (16) comprising a constant modulus of elasticity.

2. Detection device (10) according to claim 1, in which the decoupling layer (16) comprises an open structure with a lower layer (20) and a spacing structure (18) disposed on said lower layer (20).

3. Detection device (10) according to claim 2, in which said spacing structure (18) comprises flexible spacer elements distributed over a surface of the lower layer (20).

4. Detection device (10) according to claim 3, in which said spacer elements comprise neoprene blocks and/or rubber rings and/or metal springs and/or pockets filled with a gas.

5. Detection device (10) according to claim 2, in which said spacing structure (18) comprises a spacing fabric.

6. Detection device according to anyone of claims 2 to 5, in which the decoupling layer (16) comprises a nonwoven upper layer (22).

7. Detection device (10) according to claim 6, in which the pressure sensor (14) is bonded onto the nonwoven upper layer (22).

8. Detection device (10) according to claim 6, in which the pressure sensor (14) is assembled onto the nonwoven upper layer (22) by means of a self-fastening or magnetic system.

9. Detection device (10) according to anyone of claims 2 to 8, in which the lower layer (20) comprises a nonwoven layer.

10. Detection device (10) according to anyone of claims 2 to 9, comprising a heating element integrated into the decoupling layer (16).

11. Detection device (10) according to anyone of claims 2 to 10, comprising a temperature sensor and/or a humidity sensor integrated into the decoupling layer (16).

12. Detection device (10) according to anyone of claims 2 to 11, in which said pressure sensor (14) comprises
a first and a second flexible substrate, said first and second flexible substrates being arranged a certain distance one above the other with by means of a spacer,
two electrode structures disposed on said first substrate a certain distance from one another, and
a layer of semiconducting material disposed on said second substrate opposite the two electrode structures.

13. Detection device (10) according to anyone of claims 2 to 11, in which said pressure sensor (14) comprises
a first and a second flexible substrate, said first and second flexible substrates being arranged a certain distance one above the other by means of a spacer,
a first and a second electrode structure, said first electrode structure being disposed on said first substrate and said second electrode structure being disposed on said second substrate opposite said first electrode structure, and
a layer of semiconducting material disposed between said first electrode structure and said second electrode structure.

14. Detection device (10) according to anyone of claims 2 to 11, in which said pressure sensor (14) comprises a flexible support made of insulating material, at least two electrode structures disposed on said insulating substrate a certain distance from one another, and a layer of semiconducting material disposed in intimate contact on said electrode structures in an active zone of the detector, said layer of semiconducting material exhibiting an internal resistance varying with a deformation of said layer.
